# EUROPÄISCHE PATENTSCHRIFT

(11) **EP 3 781 421 B1**
(45) Veröffentlichungstag und Bekanntmachung des Hinweises auf die Patenterteilung: **11.10.2023**
(21) Anmeldenummer: 19727060.6
(22) Anmeldetag: 05.04.2019
(51) Int. Cl.: B60H 1/00, B60H 1/03, F24F 12/00, F24F 3/147

(54) **TAUSCHERELEMENT FÜR EIN FAHRZEUG SOWIE MIT DERARTIGEM TAUSCHERELEMENT AUSGESTATTETES FAHRGZEUG**
EXCHANGER ELEMENT FOR A VEHICLE AND VEHICLE EQUIPPED WITH SUCH AN EXCHANGER ELEMENT
ÉLÉMENT ÉCHANGEUR POUR VÉHICULE AINSI QUE VÉHICULE ÉQUIPÉ DUDIT ÉLÉMENT ÉCHANGEUR

(30) Priorität: 05.04.2018 CH 4422018
(43) Veröffentlichungstag der Anmeldung: 24.02.2021
(73) Patentinhaber: Zehnder Group International AG, 5722 Gränichen (CH); Plastic Concept GmbH, 02742 Neusalza-Spremberg (DE)
(72) Erfinder: HIRSCH, Christian, 08309 Eibenstock (DE); GÖPFERT, Ronny, 09569 Oederan (DE); WITT, Mathias, 02681 Schirgiswalde-Kirschau (DE); KÖHLER, Martino, 02739 Kottmar OT Eibau (DE)
(74) Vertreter: Rentsch Partner AG
(86) Internationale Anmeldenummer: PCT/IB2019/052831
(87) Internationale Veröffentlichungsnummer: WO 2019/193573

(56) Entgegenhaltungen:
- EP-A1- 2 071 267
- WO-A1-89/09143
- WO-A1-2005/036083
- WO-A1-2007/042065
- DE-A1-102011 085 667
- DE-A1-102015 115 196
- FR-A- 1 165 665
- JP-A- S57 138 413

## Beschreibung

Die Erfindung bezieht sich auf ein mit einem Tauscherelement ausgestatteten Fahrzeug. Ausserdem bezieht sich die Erfindung auf ein Verfahren zum Herstellen einer Tauscherelement-Packung zur Anordnung in einem Bauraum an Bord eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement.

Die Verwendung eines Wärmetauschers zur Heizung von Fahrgastkabinen ist bekannt. Typischerweise verwendet man die Abwärme eines Verbrennungsmotors, um mittels eines Wärmetauschers die in die Fahrgastkabine eingeleitete Zuluft vorzuwärmen. Bei dieser Verwendung ist man auf die Wärmeenergie angewiesen, die bei der Verbrennung des Treibstoffs in dem Verbrennungsmotor anfällt. Die WO 2005/036083 A1 offenbart einen Wärmetauscher für einen Ventilator.

Ausserdem ist die Verwendung einer Klimaanlage zur Konditionierung der Luft in Fahrzeugkabinen bekannt. Typische Anwendungen sind die Trocknung und/oder Kühlung der in die Fahrgastkabine eingeleiteten Zuluft. Auch bei dieser Verwendung ist man auf Energie, die bei der Verbrennung des Treibstoffs in dem Verbrennungsmotor anfällt, für den Betrieb der Klimaanlage (Kompressor) angewiesen.

Der Erfindung liegt die Aufgabe zugrunde, das Beheizen oder Klimatisieren eines Fahrzeugbereichs, insbesondere einer Fahrgastkabine und/oder eines Motorraums, mit möglichst geringem oder gar keinem zusätzlichen Energieaufwand zu ermöglichen.

Zur Lösung dieser Aufgabe stellt die Erfindung ein Fahrzeug bereit, dem ein Tauscherelement und eine Packung (4) zugeordnet ist, wobei das Tauscherelement einen Abluft-Strömungsweg sowie einen Zuluft-Strömungsweg aufweist, und wobei der Abluft-Strömungsweg und der Zuluft-Strömungsweg durch Trennwand-Abschnitte voneinander getrennt sind, welche Wärme übertragende Wandbereiche aufweisen, wobei der Abluft-Strömungsweg eine Fluidverbindung vom Innern des Fahrzeugs, insbesondere von der Fahrgastkabine oder vom Motorraum, zur äusseren Umgebung des Fahrzeugs bildet, und wobei der Zuluft-Strömungsweg eine Fluidverbindung von der äusseren Umgebung des Fahrzeugs zu einem Ort an Bord des Fahrzeugs, insbesondere zum Innern der Fahrgastkabine und/oder des Motorraums bildet, dadurch gekennzeichnet, dass das Tauscherelement in die Packung eingebettet ist, deren äussere Oberflächenform komplementär zu den inneren Abmessungen eines Bauraums an Bord des Fahrzeugs, insbesondere in der Fahrgastkabine und/oder im Motorraum, für den Einbau des Tauscherelements ist.

Das erfindungsgemässe Tauscherelement ermöglicht es, einen Teil der Wärmeenergie der aus dem Fahrzeug austretenden Abluft auf die in das Fahrzeug eintretende Zuluft zu übertragen. Dadurch wird z.B. bei nicht vorhandenem Verbrennungsmotor (reiner Elektroantrieb) oder nicht immer eingeschaltetem Verbrennungsmotor (Hybridantrieb) ein längeres Warmhalten der Fahrgastkabine im Winter ermöglicht. Durch das Einbetten des Tauscherelements in eine Packung, die speziell an den zur Verfügung stehenden Bauraum angepasst ist, wird eine solide Integration des Tauscherelements in den Bauraum an Bord eines Fahrzeugs ermöglicht. Die Packung dient somit einbautechnisch als Schnittstelle zwischen dem Bauraum und dem Tauscherelement. Insbesondere ist die Packung eine Auskleidung zumindest eines Teilbereichs der Fahrgastkabine oder des Motorraums mit Aussparungen für das Tauscherelement. Vorzugsweise dient die Packung oder ein Teil davon zur Festlegung von Luftströmen ausserhalb des Tauscherelements, welche zu dem Tauscherelement hin oder von dem Tauscherelement weg strömen. Neben einer solchen Luftführung oder Lufttrennung ausserhalb des Tauscherelements bewirkt die Packung auch eine Wärmedämmung sowie Schalldämmung.

Im Folgenden werden die Begriffe «Packung» und «Tauscherelement-Packung» verwendet. Sie haben im Zusammenhang mit der vorliegenden Erfindung dieselbe Bedeutung.

Bei einer vorteilhaften Ausführung enthält die Packung ein expandiertes und/oder geschäumtes Polymermaterial und/oder ein Fasermaterial, insbesondere aus organischen oder anorganischen Fasern. Besonders vorteilhaft ist es, wenn die Packung vollständig aus einem expandierten und/oder geschäumten Polymermaterial gefertigt ist. Dadurch lässt sich mit geringer Masse eine gute Wärmeisolierung und Schallisolierung für das Tauscherelement erzielen.

Um eine für die Wärmeisolierung, die Schallisolierung und die mechanische Dämpfung, insbesondere die Stossdämpfung des Tauscherelements, vorteilhafte Porosität der Packung zu erzielen, kann ein Material mit geschlossenen Poren, insbesondere ein geschäumtes Polymermaterial, und/oder ein Material mit offenen Poren, insbesondere ein organisches oder anorganisches Fasermaterial, verwendet werden.

Als expandiertes Polymermaterial können ein expandiertes Homo-Polymerisat wie z.B. expandiertes Polypropylen (EPP), expandiertes Polystyrol (EPS), expandiertes Polyethylen (EPE) oder expandiertes Polylactid (EPLA) verwendet werden.

Gemäss einer ersten Alternative kann als expandiertes Polymermaterial ein expandiertes Co-Polymerisat verwendet werden, welches zumindest eine der Komponenten Propylen, Styrol, Ethylen oder Milchsäure als Komponente aufweist.

Gemäss einerzweiten Alternative kann als expandiertes Polymermaterial ein Gemisch aus expandiertem Homo-Polymerisat verwendet werden, welches zumindest eine der Komponenten Polypropylen (PP), Polystyrol (PS), Polyethylen (PE) oder Polylactid (PLA) als Komponente aufweist.

Gemäss einer dritten Alternative kann als expandiertes Polymermaterial ein Gemisch aus expandiertem Co-Polymerisat verwendet werden, welches zumindest eine der Komponenten Propylen, Styrol, Ethylen oder Milchsäure als Komponente aufweist.

Gemäss einer vierten Alternative kann als expandiertes Polymermaterial ein Gemisch aus expandiertem Homo-Polymerisat und Co-Polymerisat verwendet werden, welches zumindest eine der Komponenten Propylen, Styrol, Ethylen oder Milchsäure als Komponente aufweist.

Das expandierte Polymermaterial kann eine Dichte von 20 bis 120 kg/m³ haben, vorzugsweise von 30 bis 60 kg/m³ und besonders bevorzugt von 40 bis 60 kg/m³.

Vorzugsweise betragen die Partikeldurchmesser der miteinander verschmolzenen Partikel des expandierten Polymers 2 bis 6 mm. Besonders bevorzugt sind 3 bis 5 mm.

Alternativ kann als Material für die Packung auch Polyurethan verwendet werden, wobei vorzugsweise der innere Teil der Packung Polyurethan-Schaum aufweist und der äussere Teil der Packung massives bzw. weniger geschäumtes Polyurethan aufweist.

Bei einer weiteren vorteilhaften Ausführung enthält die Packung mehrere Packungsteile. Besonders bevorzugt ist eine Packung, welche zwei Packungsteile enthält. Dies ermöglicht den Einbau der Tauscherelements mit seiner Packung in den Bauraum des Fahrzeugs mit nur wenigen Handgriffen.

Zweckmässigerweise enthält die Packung neben dem als Isolierkörper wirkenden expandierten Polymermaterial ein weiteres Polymermaterial, welches das expandierte Polymermaterial der Packung innen und/oder aussen umhüllt, wobei das weitere Polymermaterial vorzugsweise ein weniger expandiertes oder ein kompaktes, nicht-expandiertes Polymermaterial ist. Als Einhausung trägt es zum Schutz des Isolierkörpers vor mechanischer oder chemischer Beschädigung bei.

Als Material der Einhausung kann ein Thermoplast verwendet werden, wie z.B. AcrylnitrilButadien-Styrol (ABS), Polycarbonat (PC), Polypropylen (PP), Polyamid 6 (PA6), Polyamid 66 (PA66), Polyoxymethylen (POM), Acrylnitril-Styrol-Acrylat (ASA), Polystyrol (PS), Polyethylenterephthalat (PET), Polybutylenterephthalat (PBT), etc.

Die verwendeten Thermoplaste können mit Füllstoffen versehen sein, wie z.B. Glaskügelchen, Talkum, Mineralstoffen, etc., und/oder können mit Fasern verstärkt sein, wie z.B. Glasfasern, Kohlenstofffasern, Hanffasern, Bambusfasern, etc.

Bei einer weiteren vorteilhaften Ausführung wird das Thermoplast-Material bei der Herstellung der Einhausung physikalisch und/oder chemisch geschäumt. Dadurch übernimmt die Einhausung gleichzeitig die Funktion des Isolierkörpers, wodurch dieser dann als separates Bauteil entfallen kann.

Zweckmässigerweise ist die Packung, in welche das Tauscherelement eingebettet ist, mit Ausnahme ihrer Öffnungen für den Zuluft-Strömungsweg und den Abluft-Strömungsweg hermetisch dicht. Zur Erzielung einer hermetischen Abdichtung zwischen dem Tauscherelement und der Packung können Dichtungen aus einem Elastomer-Material, wie z.B. Silikon oder Polyurethan, verwendet werden.

Zweckmässigerweise enthalten die Packungsteile Befestigungsformationen, mit denen aneinandergrenzende Packungsteile aneinander befestigt werden können. So können die Packungsteile in einem ersten Schritt um das Tauscherelement herum angeordnet und aneinander befestigt werden. Die so zusammengebaute Einheit aus Tauscherelement und Packung kann dann in einem zweiten Schritt in den zur Verfügung stehenden Bauraum eingesetzt werden. Vorzugsweise sind die Befestigungsformationen an dem weiteren, weniger expandierten oder kompakten Polymermaterial der Einhausung befestigt.

Vorzugsweise ist dem Tauscherelement ein erster Ventilator zugeordnet, der stromauf oder stromab von dem Tauscherelement in dem Zuluft-Strömungsweg angeordnet und in die Packung eingebettet ist.

Vorzugsweise ist dem Tauscherelement ein zweiter Ventilator zugeordnet, der stromauf oder stromab von dem Tauscherelement in dem Abluft-Strömungsweg angeordnet und in die Packung eingebettet ist.

Vorzugsweise ist dem Tauscherelement ein erster Luftfilter zugeordnet, der stromaufseitig von dem Tauscherelement in dem Zuluft-Strömungsweg angeordnet und in die Packung eingebettet ist.

Vorzugsweise ist dem Tauscherelement ein zweiter Luftfilter zugeordnet, der stromaufseitig von dem Tauscherelement in dem Abluft-Strömungsweg angeordnet und in die Packung eingebettet ist.

Durch das Einbetten solcher Funktionselemente, wie z.B. Ventilator(en) und/oder Luftfilter, wird der Einbau der kompletten Baugruppe, welche das Tauscherelement sowie Ventilatoren und Luftfilter aufweist, noch weiter erleichtert.

Zweckmässigerweise enthält das Tauscherelement ein elektrisches Heizelement, das von einem dem Elektroantrieb oder dem Hybridantrieb zugeordneten Akkumulator gespeist werden kann. Dieses elektrische Heizelement kann bei Bedarf aktiviert werden, um das Tauscherelement zu erwärmen, falls es zu einem Einfrieren des Tauscherelements kommen sollte.

Vorzugsweise ist in dem Tauscherelement mindestens ein Temperatursensor zur Erfassung einer Lufttemperatur in dem Tauscherelement enthalten.

Vorzugsweise ist in dem Tauscherelement mindestens ein Feuchtigkeitssensor zur Erfassung einer Luftfeuchtigkeit in dem Tauscherelement enthalten.

Vorzugsweise ist in dem Tauscherelement mindestens ein Drucksensor zur Erfassung eines Luftdrucks in dem Tauscherelement enthalten.

Vorzugsweise ist in dem Tauscherelement ein Luftgütesensor enthalten. In einer besonders bevorzugten Ausführung enthält das Tauscherelement einen Sensor für flüchtige organische Verbindungen (VOC-Sensor) und/oder einen Kohlendioxid-Sensor und/oder einen Kohlenmonoxid-Sensor.

Vorzugsweise ist in der Packung eine Steuerungseinheit oder Regelungseinheit enthalten, welche mit mindestens einem der weiter oben genannten Funktionselemente, d.h. Ventilator oder elektrisches Heizelement, sowie mit mindestens einem der weiter oben genannten Sensoren, d.h. Temperatursensor, Feuchtigkeitssensor oder Drucksensor, verbunden ist. Zusammen mit den Sensoren ermöglicht die Steuerungseinheit oder Regelungseinheit einen geregelten Betrieb des Tauscherelements.

Bei einer weiteren vorteilhaften Ausführung enthalten die Trennwand-Abschnitte für Wasserdampf selektiv durchlässige Wandbereiche. Derartige Wandbereiche enthalten vorzugsweise für Wasserdampf selektiv durchlässige Polymermembranen, die auf luftdurchlässigen Trägermaterialien aufgetragen sind. Die selektiv durchlässigen Polymermembranen lassen die relativ kleinen und polaren Wassermoleküle durch das Membranmaterial hindurchtreten, während sie grosse und/oder weniger bis gar nicht polare Moleküle, wie z.B. Moleküle von Sauerstoff, Stickstoff, Kohlendioxid oder Edelgasen oder von relativ grossen Molekülen angenehm oder unangenehm riechender Stoffe, durch das Membranmaterial nicht hindurchtreten lassen. Das erfindungsgemässe Tauscherelement ermöglicht damit einerseits, einen Teil der Luftfeuchtigkeit der aus der Fahrgastkabine austretenden Abluft auf die in die Fahrgastkabine eintretende Zuluft zu übertragen. Dies ermöglicht im Winter zusätzlich zur Aufrechterhaltung einer angenehmen Raumtemperatur auch die Aufrechterhaltung einer angenehmen, ausreichend hohen Luftfeuchtigkeit in der Fahrgastkabine. Das erfindungsgemässe Tauscherelement ermöglicht damit andererseits, einen Teil der Luftfeuchtigkeit der in die Fahrgastkabine eintretenden Zuluft auf die aus der Fahrgastkabine austretenden Abluft zu übertragen. Dies ermöglicht im Sommer zusätzlich zur Aufrechterhaltung einer angenehmen Raumtemperatur auch die Aufrechterhaltung einer angenehmen, ausreichend tiefen Luftfeuchtigkeit in der Fahrgastkabine.

Vorzugsweise enthält die Packung Bereiche mit einer ersten Härte und Bereiche mit einer zweiten Härte.

Vorzugsweise hat die Packung am Tauscherelement anliegende Bereiche mit einer grösseren Härte und am Bauraum anliegende Bereiche mit einer kleineren Härte oder hat die Packung am Tauscherelement anliegende Bereiche mit einer kleineren Härte und am Bauraum anliegende Bereiche mit einer grösseren Härte.

Diese Massnahmen tragen zur Stossdämpfung bei. Insbesondere die weiter oben beschriebenen expandierten Polymermaterialien sind zwar elastisch, absorbieren aber einen grossen Teil der in das Material bei mechanischer Verformung eingetragenen Verformungsenergie, so dass eine gute Dämpfung erzielt wird.

Durch die Erfindung wird ein Fahrzeug, insbesondere Flugzeug, Schiff, Seilbahn oder Aufzug, insbesondere mit Elektroantrieb oder mit Hybridantrieb oder mit Segelantrieb, bereitgestellt, wobei dem Fahrzeug, insbesondere der Fahrgastkabine und/oder dem Motorraum, ein Tauscherelement und eine Packung der weiter oben beschriebenen Bauart zugeordnet ist.

In dem Abluft-Strömungsweg und/oder in dem Zuluft-Strömungsweg kann ein Ventilator geschaltet sein, um Abluft entlang des Abluft-Strömungswegs und/oder Zuluft entlang des Zuluft-Strömungswegs zu transportieren.

Vorzugsweise steht der Abluft-Strömungsweg an einem Tiefdruck-Aussenbereich der Fahrgastkabine mit deren äusserer Umgebung in Fluidverbindung. Dadurch kann auch ohne Ventilator die Abluft aus der Fahrgastkabine abgezogen werden.

Vorzugsweise steht der Zuluft-Strömungsweg an einem Hochdruck-Aussenbereich der Fahrgastkabine mit deren äusserer Umgebung in Fluidverbindung. Dadurch kann auch ohne Ventilator die Zuluft in die Fahrgastkabine hineingedrückt werden.

Vorzugsweise ist in der Fahrgastkabine mindestens ein Temperatursensor zur Erfassung einer Lufttemperatur in der Fahrgastkabine enthalten.

Vorzugsweise ist in der Fahrgastkabine mindestens ein Feuchtigkeitssensor zur Erfassung einer Luftfeuchtigkeit in der Fahrgastkabine enthalten.

Vorzugsweise ist in der Fahrgastkabine mindestens ein Drucksensor zur Erfassung eines Luftdrucks in der Fahrgastkabine enthalten.

Zusammen mit den Sensoren in der Fahrgastkabine und/oder den Sensoren in dem Tauscherelement ermöglicht die Steuerungseinheit oder Regelungseinheit einen geregelten Betrieb des Tauscherelements, um angenehme Klimabedingungen in der Fahrgastkabine zu erzielen.

Wenn das Fahrzeug ein Automobil ist, kann eine Packung mit einem in ihr eingebetteten Tauscherelement an mindestens einem der folgenden Orte des Automobils angeordnet werden: an der Decke der Fahrgastkabine; am Dach des Automobils; an der Frontseite des Automobils; in der A-Säule des Automobils; in der B-Säule des Automobils; in der C-Säule des Automobils; im Heck des Automobils; unter der Motorhaube des Automobils; im Boden des Automobils.

Bei Anordnung der Packung an der Decke bzw. im Dachhimmel der Fahrgastkabine verläuft der Zuluft-Strömungsweg vorzugsweise von einem Eintrittsbereich an der Frontseite des Automobils durch den Motorraum, durch mindestens eine der A-Säulen, durch das Tauscherelement hindurch und schliesslich durch mindestens eine der B-Säulen in den Fussraum der Fahrgastkabine. Der Abluft-Strömungsweg kann vom Kabinenraum durch den Heckbereich, durch mindestens eine der C-Säulen und durch das Tauscherelement hindurch mit einem Austrittsbereich am Fahrzeugdach verlaufen. Alternativ kann der Abluft-Strömungsweg vom Kabinenraum durch mindestens eine der C-Säulen und durch das Tauscherelement hindurch mit einem Austrittsbereich am Fahrzeugdach verlaufen.

Bei Anordnung der Packung an der Frontseite des Automobils verläuft der Zuluft-Strömungsweg vorzugsweise von einem Eintrittsbereich an der Frontseite des Automobils durch das Tauscherelement und durch den Motorraum hindurch in den Kabinenraum. Der Abluft-Strömungsweg kann vom Kabinenraum durch den Motorraum und durch das Tauscherelement hindurch mit einem Austrittsbereich an mindestens einer Fahrzeugseite verlaufen.

Bei Anordnung der Packung in der B-Säule des Automobils verläuft der Zuluft-Strömungsweg vorzugsweise von einem Eintrittsbereich an der Frontseite des Automobils durch den Motorraum, durch mindestens eine der A-Säulen, durch einen Teil des Fahrzeugdaches und schliesslich durch das Tauscherelement hindurch in den Fussraum der Fahrgastkabine. Der Abluft-Strömungsweg kann vom Kabinenraum durch mindestens eine der B-Säulen, durch das Tauscherelement hindurch und durch einen hinteren Teil des Fahrzeugdaches mit einem Austrittsbereich an der Heckseite des Fahrzeugs verlaufen.

Bei Anordnung der Packung unter der Motorhaube eines Automobils verläuft der Zuluft-Strömungsweg vorzugsweise von einem Eintrittsbereich an der Frontseite des Automobils durch das Tauscherelement hindurch, durch einen Teil des Motorraum und schliesslich in den vorderen Bereich des Kabinenraums. Der Abluft-Strömungsweg kann vom Kabinenraum durch den Heckbereich, entlang des Bodens des Fahrzeugs in den vorderen Bereich des Kabinenraums und durch das Tauscherelement hindurch mit einem Austrittsbereich an mindestens einer Fahrzeugseite verlaufen.

Die Erfindung stellt auch ein Verfahren bereit zum Herstellen einer Tauscherelement-Packung zur Anordnung in einem Bauraum an Bord eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement, wobei das Verfahren die folgenden Schritte aufweist:
a) Bereitstellen eines Tauscherelements;
b) Erfassen der inneren Abmessungen des Bauraums;
c) Erfassen der äusseren Abmessungen des Tauscherelements;
d) Bereitstellen einer Form mit einem Formhohlraum, welcher durch eine äussere Formwand und eine innere Formwand begrenzt ist, wobei die Gestalt der äusseren Formwand durch die inneren Abmessungen bzw. Innenwandbereiche des Bauraums definiert ist und die Gestalt der inneren Formwand durch die äusseren Abmessungen bzw. Aussenwandbereiche des Tauscherelements definiert ist;
e) partielles Füllen des Formhohlraums mit einem fliessfähigen oder rieselfähigen Material;
f) Expandieren bzw. Schäumen des fliessfähigen oder rieselfähigen Materials, wobei der Formhohlraum mit dem expandierten bzw. geschäumten Material ausgefüllt wird; und
g) Öffnen der Form und Entnehmen des expandierten bzw. geschäumten Materials aus dem Formhohlraum als Tauscherelement-Packung, nachdem sich das expandierte bzw. geschäumte Material verfestigt hat.

Die Schritte a), b) und c) werden für jede Art von Fahrgastkabine einmal durchgeführt. Die Schritte d), e), f) und g) werden dann zur Herstellung einer Vielzahl von Tauscherelement-Packungen, die für eine gegebene Fahrgastkabine passend sind, wiederholt durchgeführt.

Die Erfindung stellt auch ein alternatives Verfahren bereit zum Herstellen einer Tauscherelement-Packung in einem Bauraum an Bord eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement, wobei das Verfahren die folgenden Schritte aufweist:
a) Bereitstellen eines Tauscherelements;
b) Anordnen des Tauscherelements in dem Bauraum, wodurch ein Formhohlraum definiert wird zwischen den inneren Abmessungen bzw. Innenwandbereichen des Bauraums und äusseren Abmessungen bzw. Aussenwandbereichen des Tauscherelements;
c) Ausschäumen des Formhohlraums mit einem schäumbaren Polymermaterial; und
d) Warten, bis sich das geschäumte Polymermaterial verfestigt hat.

Die Erfindung stellt auch ein weiteres alternatives Verfahren bereit zum Herstellen einer Tauscherelement-Packung zur Anordnung in einem Bauraum an Bord eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement, wobei das Verfahren die folgenden Schritte aufweist:
a) Bereitstellen eines Tauscherelements;
b) Erfassen der inneren Abmessungen des Bauraums;
c) Erfassen der äusseren Abmessungen des Tauscherelements;
d) Bereitstellen einer Form mit einem Formhohlraum, welcher durch eine äussere Formwand und eine innere Formwand begrenzt ist, wobei die Gestalt der äusseren Formwand durch die inneren Abmessungen bzw. Innenwandbereiche des Bauraums definiert ist und die Gestalt der inneren Formwand durch die äusseren Abmessungen bzw. Aussenwandbereiche des Tauscherelements definiert ist;
e) Füllen des Formhohlraums mit einem geschmolzenen Material durch Einspritzen des geschmolzenen Materials in den Formhohlraum; und
f) Öffnen der Form und Entnehmen des eingespritzten Materials aus dem Formhohlraum als Tauscherelement-Packung, nachdem sich das eingespritzte Material verfestigt hat.

Die Schritte a), b) und c) werden für jede Art von Fahrgastkabine einmal durchgeführt. Die Schritte d), e) und f) werden dann zur Herstellung einer Vielzahl von Tauscherelement-Packungen, die für eine gegebene Fahrgastkabine passend sind, wiederholt durchgeführt.

Ein derartiges Spritzguss-Verfahren kann zur Herstellung der Tauscherelement-Packung als Kompaktspritzguss-Verfahren, als Schaumspritzguss-Verfahren mit physikalischem und/oder chemischem Schäumen, als Gasinnendruck-Spritzgussverfahren oder als Gasgegendruck-Spritzgussverfahren durchgeführt werden.

Die Erfindung stellt auch ein noch weiteres alternatives Verfahren bereit zum Herstellen einerTauscherelement-Packung zur Anordnung in einem Bauraum an Bord eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement, wobei das Verfahren die folgenden Schritte aufweist:
a) Bereitstellen eines Tauscherelements;
b) Anordnen des Tauscherelements in dem Bauraum, wodurch ein Formhohlraum definiert wird zwischen den inneren Abmessungen bzw. Innenwandbereichen des Bauraums und äusseren Abmessungen bzw. Aussenwandbereichen des Tauscherelements;
c) Bereitstellen von pulverförmigem oder grobkörnigem, schmelzbaren Baumaterial;
d) Aufbringen einer das pulverförmige oder grobkörnige Baumaterial aufweisenden Baumaterial-Schicht auf eine Zieloberfläche in einem Baubereich mittels eines Aufbringungsmittels;
e) gezieltes Einwirkenlassen von Energie auf ausgewählte Stellen der Baumaterial-Schicht, die einem Querschnitt der zu bildenden Tauscherelement-Packung bzw. des Formhohlraums innerhalb der Baumaterial-Schicht entsprechen, um das pulverförmige oder grobkörnige Baumaterial an den ausgewählten Stellen innerhalb der Baumaterial-Schicht und mit einer zuvor aufgebrachten und verschmolzenen Baumaterial-Schicht zu verschmelzen; und
f) ggfs. Entfernen von nicht verschmolzenem pulverförmigem oder grobkörnigem Baumaterial;
wobei die Schritte c), d), e) und f) wiederholt durchgeführt werden, um die zu bildende Tauscherelement-Packung schichtweise aufzubauen.

Die Schritte a) und b) werden für jede Art von Fahrgastkabine einmal durchgeführt. Die Schritte c), d), e) und f) werden dann zur Herstellung einer Vielzahl von Tauscherelement-Packungen, die für eine gegebene Fahrgastkabine passend sind, wiederholt durchgeführt.

Je nach Feinheit der Baumaterial-Partikel des pulverförmigen bis grobkörnigen Baumaterials können verschiedene Energiequellen verwendet werden.

Vorzugsweise verwendet man für pulverförmiges Baumaterial (mittlere Partikel-Durchmesser kleiner als 1 mm) stark fokussierte Laserstrahlen, d.h. ein Feines Selektives Lasersintern.

Vorzugsweise verwendet man für grobkörniges Baumaterial (mittlere Partikel-Durchmesser grösser als 1 mm) weniger stark fokussierte Laserstrahlen, d.h. ein Grobes Selektives Lasersintern. Bei diesem groben selektiven Lasersintern kann grobkörniges Baumaterial verwendet werden, das durch die Einwirkung von Energie, insbesondere von Laserstrahlung und/oder Wärme durch physikalisch und/oder chemisch ausgelöste Gasproduktion in den Baumaterial-Körnern erweicht und/oder schmilzt und dabei expandiert bzw. schäumt, wobei ein Verkleben bzw. Verschmelzen expandierter bzw. geschäumter Partikel innerhalb einer aufgebrachten Schicht und mit einer zuvor aufgebrachten Schicht erzielt wird.

Vorzugsweise betragen die Partikeldurchmesser der miteinander verklebten bzw. miteinander verschmolzenen Partikel des expandierten Polymers 2 bis 6 mm. Besonders bevorzugt sind 3 bis 5 mm. Dies hat den Vorteil, dass man bei ausreichender Glattheit der Oberfläche für eine mit diesem additiven Verfahren hergestellte Tauscherelement-Packung kurze Bauzeiten erzielen kann.

Die Erfindung stellt auch ein noch zusätzliches weiteres alternatives Verfahren bereit zum Herstellen einer Tauscherelement-Packung zur Anordnung in einem Bauraum eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement, wobei das Verfahren die folgenden Schritte aufweist:
a) Bereitstellen eines Tauscherelements;
b) Anordnen des Tauscherelements in dem Bauraum, wodurch ein Formhohlraum definiert wird zwischen den inneren Abmessungen bzw. Innenwandbereichen des Bauraums und äusseren Abmessungen bzw. Aussenwandbereichen des Tauscherelements;
c) Bereitstellen von flüssigem oder pastösem, aushärtbarem Baumaterial;
d) gezieltes Auftragen des flüssigen oder pastösen, aushärtbaren Baumaterials an ausgewählten Stellen als Baumaterial-Schicht auf eine Zieloberfläche in einem Baubereich mittels eines Auftragungsmittels, wobei die Baumaterial-Schicht einem Querschnitt der zu bildenden Tauscherelement-Packung bzw. des Formhohlraums entspricht;
e) Aushärtenlassen der Baumaterial-Schicht, um das flüssige oder pastöse Baumaterial innerhalb der Baumaterial-Schicht zu verfestigen und mit einer zuvor aufgetragenen und ausgehärteten Baumaterial-Schicht zu verbinden;
wobei die Schritte d) und e) wiederholt durchgeführt werden, um die zu bildende Tauscherelement-Packung schichtweise aufzubauen.

Die Schritte a) und b) werden für jede Art von Fahrgastkabine einmal durchgeführt. Die Schritte c), d) und e) werden dann zur Herstellung einer Vielzahl von Tauscherelement-Packungen, die für eine gegebene Fahrgastkabine passend sind, wiederholt durchgeführt.

Je nach Feinheit bzw. Portionsgrösse des punktförmig und/oder linienförmig aufgetragenen flüssigen oder pastösen Baumaterials können verschiedene Energiequellen verwendet werden.

Vorzugsweise verwendet man ein grobes Auftragen des Baumaterials (mittlere Tropfen-Durchmesser oder Strang-Durchmesser grösser als 1 mm), d.h. ein Grobes Selektives Auftragen bzw. einen Groben 3D-Druck. Bei diesem groben selektiven Auftragen bzw. groben 3D-Druck kann eine Baumaterial-Masse verwendet werden, die beim Austreten aus einem Baumaterial-Vorratsbehälter über eine Düse und/oder durch die Einwirkung von Energie, insbesondere von Strahlung und/oder Wärme durch physikalisch und/oder chemisch ausgelöste Gasproduktion in der Baumaterial-Masse expandiert bzw. schäumt, wobei ein Verkleben bzw. Verschmelzen expandierter bzw. geschäumter Partikel innerhalb einer aufgebrachten Schicht und mit einer zuvor aufgebrachten Schicht erzielt wird.

Vorzugsweise betragen auch hier die Durchmesser der miteinander verklebten bzw. miteinander verschmolzenen Tropfen oder Stränge des expandierten bzw. geschäumten Polymers 2 bis 6 mm. Besonders bevorzugt sind 3 bis 5 mm. Dies hat den Vorteil, dass man bei ausreichender Glattheit der Oberfläche auch für eine mit diesem additiven Verfahren hergestellte Tauscherelement-Packung kurze Bauzeiten erzielen kann.

Wie weiter oben erwähnt, sind das erfindungsgemässe Tauscherelement bzw. die erfindungsgemässe Fahrgastkabine nicht auf den "Winterbetrieb" (tiefe Aussen-Temperatur und geringe Aussen-Luftfeuchtigkeit) beschränkt, bei dem es darum geht, möglichst viel Wärme und ggfs. Wasserdampf von Personen in der Fahrgastkabine zurückzuhalten. Vielmehr eignet sich das erfindungsgemässe Tauscherelement bzw. die erfindungsgemässe Fahrgastkabine auch für den "Sommerbetrieb" (hohe Aussen-Temperatur und hohe Aussen-Luftfeuchtigkeit), bei dem es darum geht, möglichst viel Wärme und ggfs. Wasserdampf von Personen in der Fahrgastkabine fernzuhalten, d.h. die relativ warme und relativ feuchte Zuluft durch die relativ kühle und relativ trockene Abluft vorzukühlen und ggfs. vorzutrocknen.

Weitere Merkmale, Vorteile und Anwendungsmöglichkeiten der Erfindung ergeben sich aus der nun folgenden Beschreibung nicht einschränkend aufzufassender Ausführungsbeispiele der Erfindung anhand der Zeichnung.

Es zeigen:
- **Fig. 1**: eine Perspektivansicht des Tauscherelements mit Packung;
- **Fig. 2**: eine Schnittansicht des Tauscherelements mit Packung;
- **Fig. 3**: eine erste Seitenansicht des Tauscherelements mit Packung;
- **Fig. 4**: eine zweite Seitenansicht des Tauscherelements mit Packung;
- **Fig. 5**: eine schematische Ansicht einer ersten Tauscherelement/Packung-Anordnung;
- **Fig. 6**: eine schematische Ansicht einer zweiten Tauscherelement/Packung-Anordnung;
- **Fig. 7**: eine schematische Ansicht einer dritten Tauscherelement/Packung-Anordnung;
- **Fig. 8**: eine schematische Ansicht einer vierten Tauscherelement/Packung-Anordnung.

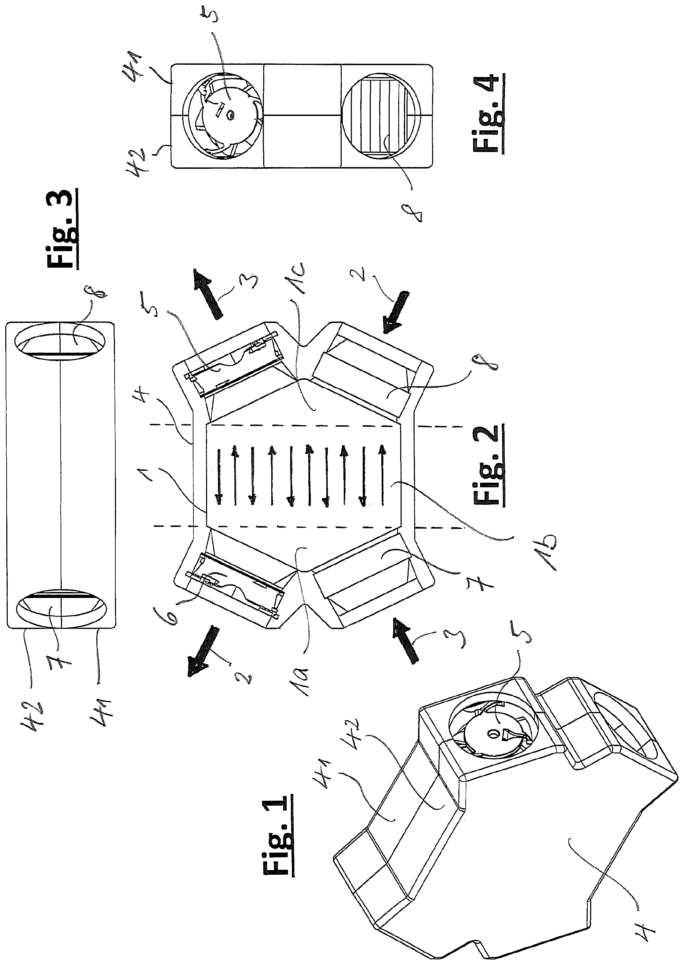

In **Fig. 1, Fig. 2, Fig. 3 und Fig. 4** sind ein Tauscherelement 1 für eine Fahrgastkabine eines Fahrzeugs gezeigt. Das Tauscherelement 1 hat einen Abluft-Strömungsweg 2 sowie einen Zuluft-Strömungsweg 3. Der Abluft-Strömungsweg 2 und der Zuluft-Strömungsweg 3 sind durch Trennwand-Abschnitte (nicht gezeigt) voneinander getrennt sind. Diese Trennwand-Abschnitte enthalten Wärme übertragende Wandbereiche. Der Abluft-Strömungsweg 2 bildet eine Fluidverbindung vom Innern der Fahrgastkabine zur äusseren Umgebung der Fahrgastkabine, während der Zuluft-Strömungsweg 3 eine Fluidverbindung von der äusseren Umgebung der Fahrgastkabine zum Innern der Fahrgastkabine bildet. Im Innern des Tauscherelements 1 befinden sich ein erster Kreuzstrombereich 1a, ein Gegenstrombereich 1b und ein zweiter Kreuzstrombereich 1c. In den beiden Kreuzstrombereichen 1a und 1c verlaufen der Abluft-Strömungsweg 2 und der Zuluft-Strömungsweg 3 zueinander gekreuzt. In dem Gegenstrombereich 1b verlaufen der Abluft-Strömungsweg 2 und der Zuluft-Strömungsweg 3 zueinander parallel.

Das Tauscherelement 1 ist in eine Packung 4 eingebettet, deren äussere Oberflächenform komplementär zu den inneren Abmessungen eines Bauraums in der Fahrgastkabine für den Einbau des Tauscherelements 1 ist. Die Packung 4 ist aus einem expandierten Polymermaterial gefertigt und besteht aus einem ersten Packungsteil 41 und einem zweiten Packungsteil 42, die je nach Situation symmetrisch zueinander oder sogar identisch sein können oder aber eine ganz spezielle «unförmige» Gestalt haben können, die den Gegebenheiten des zur Verfügung stehenden Bauraums in der Fahrgastkabine angepasst ist.

Dem Tauscherelement 1 ist ein erster Ventilator 5 zugeordnet, der stromab von dem Tauscherelement 1 in dem Zuluft-Strömungsweg 3 angeordnet und in die Packung 4 eingebettet ist. Ausserdem ist dem Tauscherelement 1 ein zweiter Ventilator 6 zugeordnet, der stromab von dem Tauscherelement 1 in dem Abluft-Strömungsweg 2 angeordnet und in die Packung 4 eingebettet ist.

Dem Tauscherelement 1 ist ein erster Luftfilter 7 zugeordnet, der stromaufseitig von dem Tauscherelement in dem Zuluft-Strömungsweg 3 angeordnet und in die Packung 4 eingebettet ist. Ausserdem ist dem Tauscherelement 1 ein zweiter Luftfilter 8 zugeordnet, der stromaufseitig von dem Tauscherelement in dem Abluft-Strömungsweg 2 angeordnet und in die Packung 4 eingebettet ist.

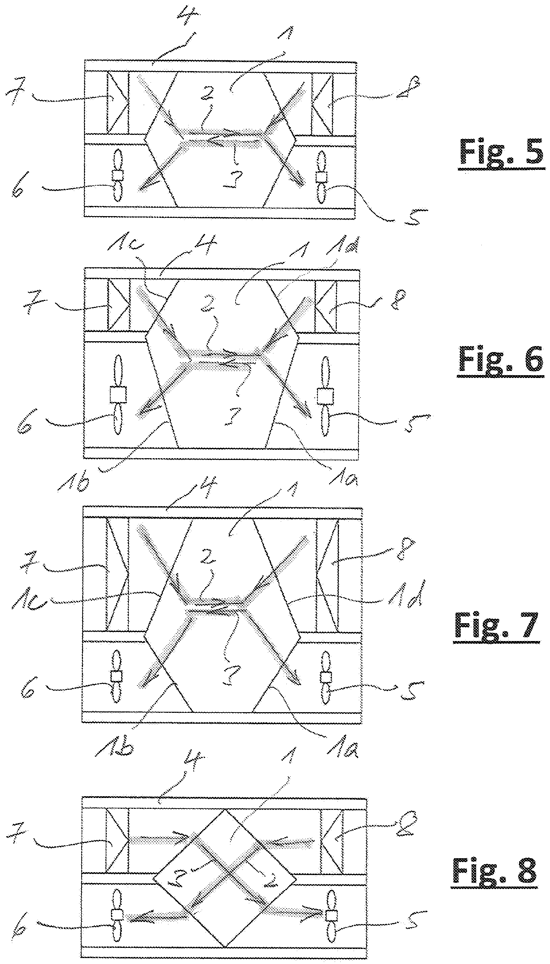

In **Fig. 5, Fig. 6, Fig. 7 und Fig. 8** sind jeweils eine Anordnung aus Tauscherelement 1 und Packung 4 gezeigt. Dem Tauscherelement 1 ist ein erster Ventilator 5 zugeordnet, der stromab von dem Tauscherelement 1 in dem Zuluft-Strömungsweg 3 angeordnet und in die Packung 4 eingebettet ist. Dem Tauscherelement 1 ist ein zweiter Ventilator 6 zugeordnet, der stromauf oder stromab von dem Tauscherelement 1 in dem Abluft-Strömungsweg 2 angeordnet und in die Packung 4 eingebettet ist. Dem Tauscherelement 1 ist ein erster Luftfilter 7 zugeordnet, der stromaufseitig von dem Tauscherelement 1 in dem Zuluft-Strömungsweg 3 angeordnet und in die Packung 4 eingebettet ist. Dem Tauscherelement 1 ist ein zweiter Luftfilter 8 zugeordnet, der stromaufseitig von dem Tauscherelement 1 in dem Abluft-Strömungsweg 2 angeordnet und in die Packung 4 eingebettet ist. Bei diesen Anordnungen arbeiten die beiden Ventilatoren 5 und 6 jeweils im Saugmodus.

In **Fig. 5** ist eine schematische Ansicht einer ersten Anordnung aus Tauscherelement 1 und Packung 4 gezeigt. Das Tauscherelement 1 ist hier ein symmetrischer Gegenstrom-Wärmetauscher mit einem ersten Kreuzstrombereich auf der linken Seite und einem zweiten Kreuzstrombereich auf der rechten Seite, in welchen sich jeweils der Abluft-Strömungsweg 2 und der Zuluft-Strömungsweg 3 kreuzen. Dazwischen ist ein Gegenstrombereich angeordnet, in welchem der Abluft-Strömungsweg 2 und der Zuluft-Strömungsweg 3 parallel und gegenläufig sind.

In **Fig. 6** ist eine schematische Ansicht einer zweiten Anordnung aus Tauscherelement 1 und Packung 4 gezeigt. Das Tauscherelement 1 ist hier ein asymmetrischer Gegenstrom-Wärmetauscher mit einem ersten Kreuzstrombereich auf der linken Seite und einem zweiten Kreuzstrombereich auf der rechten Seite, in welchen sich jeweils der Abluft-Strömungsweg 2 und der Zuluft-Strömungsweg 3 kreuzen. Dazwischen ist ein Gegenstrombereich angeordnet, in welchem der Abluft-Strömungsweg 2 und der Zuluft-Strömungsweg 3 parallel und gegenläufig sind. Einem ersten grossen Ausströmbereich 1a des Tauscherelements 1 ist ein erster grosser Ventilator 5 zugeordnet. Einem zweiten grossen Ausströmbereich 1b des Tauscherelements 1 ist ein zweiter grosser Ventilator 6 zugeordnet. Einem ersten kleinen Einströmbereich 1c des Tauscherelements 1 ist ein erster kleiner Luftfilter 7 zugeordnet. Einem zweiten kleinen Einströmbereich 1d des Tauscherelements 1 ist ein zweiter kleiner Luftfilter 8 zugeordnet.

In **Fig. 7** ist eine schematische Ansicht einer dritten Anordnung aus Tauscherelement 1 und Packung 4 gezeigt. Das Tauscherelement 1 ist hier ebenfalls ein asymmetrischer Gegenstrom-Wärmetauscher mit einem ersten Kreuzstrombereich auf der linken Seite und einem zweiten Kreuzstrombereich auf der rechten Seite, in welchen sich jeweils der Abluft-Strömungsweg 2 und der Zuluft-Strömungsweg 3 kreuzen. Dazwischen ist ein Gegenstrombereich angeordnet, in welchem der Abluft-Strömungsweg 2 und der Zuluft-Strömungsweg 3 parallel und gegenläufig sind. Einem ersten kleinen Ausströmbereich 1a des Tauscherelements 1 ist ein erster kleiner Ventilator 5 zugeordnet. Einem zweiten kleinen Ausströmbereich 1b des Tauscherelements 1 ist ein zweiter kleiner Ventilator 6 zugeordnet. Einem ersten grossen Einströmbereich 1c des Tauscherelements 1 ist ein erster grosser Luftfilter 7 zugeordnet. Einem zweiten grossen Einströmbereich 1d des Tauscherelements 1 ist ein zweiter grosser Luftfilter 8 zugeordnet.

In **Fig. 8** ist eine schematische Ansicht einer vierten Anordnung aus Tauscherelement 1 und Packung 4 gezeigt. Das Tauscherelement 1 ist hier ein Kreuzstrom-Wärmetauscher mit nur einem Kreuzstrombereich, in welchem sich der Abluft-Strömungsweg 2 und der Zuluft-Strömungsweg 3 kreuzen.

## Patentansprüche

1. Fahrzeug, wobei dem Fahrzeug, insbesondere einer Fahrgastkabine und/oder einem Motorraum des Fahrzeugs, ein Tauscherelement (1) und eine Packung (4) zugeordnet ist, wobei das Tauscherelement einen Abluft-Strömungsweg (2) sowie einen Zuluft-Strömungsweg (3) aufweist, und wobei der Abluft-Strömungsweg und der Zuluft-Strömungsweg durch Trennwand-Abschnitte voneinander getrennt sind, welche Wärme übertragende Wandbereiche aufweisen, wobei der Abluft-Strömungsweg (2) eine Fluidverbindung vom Innern des Fahrzeugs, insbesondere von der Fahrgastkabine oder vom Motorraum, zur äusseren Umgebung des Fahrzeugs bildet, und wobei der Zuluft-Strömungsweg (3) eine Fluidverbindung von der äusseren Umgebung des Fahrzeugs zu einem Ort an Bord des Fahrzeugs, insbesondere zum Innern der Fahrgastkabine und/oder des Motorraums bildet, wobei das Tauscherelement (1) in die Packung (4) eingebettet ist, deren äussere Oberflächenform komplementär zu den inneren Abmessungen eines Bauraums an Bord des Fahrzeugs, insbesondere in der Fahrgastkabine und/oder im Motorraum, für den Einbau des Tauscherelements (1) ist.

2. Fahrzeug nach Anspruch 1, **dadurch gekennzeichnet, dass** die Packung (4) ein expandiertes und/oder geschäumtes Polymermaterial und/oder ein Fasermaterial, insbesondere aus organischen oder anorganischen Fasern, aufweist, und/oder **dadurch gekennzeichnet, dass** die Packung (4) mehrere Packungsteile (41, 42) aufweist.

3. Fahrzeug nach einem der Ansprüche 1 oder 2, **dadurch gekennzeichnet, dass** die Packung (4) ein weiteres Polymermaterial aufweist, welches das expandierte Polymermaterial der Packung innen und/oder aussen umhüllt und wobei vorzugsweise das weitere Polymermaterial ein weniger expandiertes oder ein kompaktes, nicht-expandiertes Polymermaterial ist.

4. Fahrzeug nach einem der Ansprüche 1 bis 3, **dadurch gekennzeichnet, dass** dem Tauscherelement ein erster Ventilator (5) zugeordnet ist, der stromauf oder stromab von dem Tauscherelement in dem Zuluft-Strömungsweg (3) angeordnet und in die Packung (4) eingebettet ist; und/oder **dadurch gekennzeichnet, dass** dem Tauscherelement ein zweiter Ventilator (6) zugeordnet ist, der stromauf oder stromab von dem Tauscherelement in dem Abluft-Strömungsweg (2) angeordnet und in die Packung (4) eingebettet ist.

5. Fahrzeug nach einem der Ansprüche 1 bis 4, **dadurch gekennzeichnet, dass** dem Tauscherelement ein erster Luftfilter (7) zugeordnet ist, der stromaufseitig von dem Tauscherelement in dem Zuluft-Strömungsweg (3) angeordnet und in die Packung (4) eingebettet ist; und/oder **dadurch gekennzeichnet, dass** dem Tauscherelement ein zweiter Luftfilter (8) zugeordnet ist, der stromaufseitig von dem Tauscherelement in dem Abluft-Strömungsweg (2) angeordnet und in die Packung (4) eingebettet ist.

6. Fahrzeug nach einem der Ansprüche 1 bis 5, **dadurch gekennzeichnet, dass** die Trennwand-Abschnitte für Wasserdampf selektiv durchlässige Wandbereiche aufweisen.

7. Fahrzeug nach einem der Ansprüche 1 bis 6, **dadurch gekennzeichnet, dass** die Packung (4) Bereiche mit einer ersten Härte und Bereiche mit einer zweiten Härte aufweist, wobei vorzugsweise die Packung (4) am Tauscherelement anliegende Bereiche mit einer grösseren Härte aufweist und am Bauraum anliegende Bereiche mit einer kleineren Härte aufweist, oder dass die Packung (4) am Tauscherelement anliegende Bereiche mit einer kleineren Härte aufweist und am Bauraum anliegende Bereiche mit einer grösseren Härte aufweist.

8. Fahrzeug nach einem der vorherigen Ansprüche, wobei das Fahrzeug ein Automobil ist und die eine Packung (4) mit einem in ihr eingebetteten Tauscherelement (1) an mindestens einem der folgenden Orte des Automobils angeordnet ist: an der Decke der Fahrgastkabine; am Dach des Automobils; an der Frontseite des Automobils; in der A-Säule des Automobils; in der B-Säule des Automobils; in der C-Säule des Automobils; im Heck des Automobils; unter der Motorhaube des Automobils; im Boden des Automobils.

9. Fahrzeug nach Anspruch 8, **dadurch gekennzeichnet, dass** der Abluft-Strömungsweg (2) an einem Tiefdruck-Aussenbereich des Fahrzeugs mit dessen äusserer Umgebung in Fluidverbindung steht; und /oder **dadurch gekennzeichnet, dass** der Zuluft-Strömungsweg (3) an einem Hochdruck-Aussenbereich des Fahrzeugs mit dessen äusserer Umgebung in Fluidverbindung steht.

10. Fahrzeug nach einem der Ansprüche 8 oder 9, **dadurch gekennzeichnet, dass** das Tauscherelement (1) ein elektrisches Heizelement aufweist, das von einem dem Elektroantrieb oder dem Hybridantrieb zugeordneten Akkumulator gespeist werden kann.

11. Verfahren zum Herstellen einer Tauscherelement-Packung (4) zur Anordnung in einem Bauraum an Bord eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement (1), wobei das Verfahren die folgenden Schritte aufweist:
a) Bereitstellen eines Tauscherelements;
b) Erfassen der inneren Abmessungen des Bauraums;
c) Erfassen der äusseren Abmessungen des Tauscherelements;
d) Bereitstellen einer Form mit einem Formhohlraum, welcher durch eine äussere Formwand und eine innere Formwand begrenzt ist, wobei die Gestalt der äusseren Formwand durch die inneren Abmessungen bzw. Innenwandbereiche des Bauraums definiert ist und die Gestalt der inneren Formwand durch die äusseren Abmessungen bzw. Aussenwandbereiche des Tauscherelements definiert ist;
e) partielles Füllen des Formhohlraums mit einem fliessfähigen oder rieselfähigen Material;
f) Expandieren bzw. Schäumen des fliessfähigen oder rieselfähigen Materials, wobei der Formhohlraum mit dem expandierten bzw. geschäumten Material ausgefüllt wird; und
g) Öffnen der Form und Entnehmen des expandierten bzw. geschäumten Materials aus dem Formhohlraum als Tauscherelement-Packung (4), nachdem sich das expandierte bzw. geschäumte Material verfestigt hat.

12. Verfahren zum Herstellen einer Tauscherelement-Packung (4) in einem Bauraum an Bord eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement (1), wobei das Verfahren die folgenden Schritte aufweist:
a) Bereitstellen eines Tauscherelements;
b) Anordnen des Tauscherelements in dem Bauraum, wodurch ein Formhohlraum definiert wird zwischen den inneren Abmessungen bzw. Innenwandbereichen des Bauraums und äusseren Abmessungen bzw. Aussenwandbereichen des Tauscherelements;
c) Ausschäumen des Formhohlraums mit einem schäumbaren Polymermaterial; und
d) Warten, bis sich das geschäumte Polymermaterial verfestigt hat.

13. Verfahren zum Herstellen einer Tauscherelement-Packung (4) zur Anordnung in einem Bauraum an Bord eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement (1), wobei das Verfahren die folgenden Schritte aufweist:
a) Bereitstellen eines Tauscherelements;
b) Erfassen der inneren Abmessungen des Bauraums;
c) Erfassen der äusseren Abmessungen des Tauscherelements;
d) Bereitstellen einer Form mit einem Formhohlraum, welcher durch eine äussere Formwand und eine innere Formwand begrenzt ist, wobei die Gestalt der äusseren Formwand durch die inneren Abmessungen bzw. Innenwandbereiche des Bauraums definiert ist und die Gestalt der inneren Formwand durch die äusseren Abmessungen bzw. Aussenwandbereiche des Tauscherelements definiert ist;
e) Füllen des Formhohlraums mit einem geschmolzenen Material durch Einspritzen des geschmolzenen Materials in den Formhohlraum; und
f) Öffnen der Form und Entnehmen des eingespritzten Materials aus dem Formhohlraum als Tauscherelement-Packung (4), nachdem sich das eingespritzte Material verfestigt hat.

14. Verfahren zum Herstellen einer Tauscherelement-Packung (4) zur Anordnung in einem Bauraum an Bord eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement (1), wobei das Verfahren die folgenden Schritte aufweist:
a) Bereitstellen eines Tauscherelements;
b) Anordnen des Tauscherelements in dem Bauraum, wodurch ein Formhohlraum definiert wird zwischen den inneren Abmessungen bzw. Innenwandbereichen des Bauraums und äusseren Abmessungen bzw. Aussenwandbereichen des Tauscherelements;
c) Bereitstellen von pulverförmigem oder grobkörnigem, schmelzbaren Baumaterial;
d) Aufbringen einer das pulverförmige oder grobkörnige Baumaterial aufweisenden Baumaterial-Schicht auf eine Zieloberfläche in einem Baubereich mittels eines Aufbringungsmittels;
e) gezieltes Einwirkenlassen von Energie auf ausgewählte Stellen der Baumaterial-Schicht, die einem Querschnitt der zu bildenden Tauscherelement-Packung bzw. des Formhohlraums innerhalb der Baumaterial-Schicht entsprechen, um das pulverförmige oder grobkörnige Baumaterial an den ausgewählten Stellen zu verschmelzen, und
f) ggfs. Entfernen von nicht verschmolzenem pulverförmigem oder grobkörnigem Baumaterial;
wobei die Schritte d) und e) wiederholt durchgeführt werden, um die zu bildende Tauscherelement-Packung schichtweise aufzubauen.

15. Verfahren zum Herstellen einer Tauscherelement-Packung (4) zur Anordnung in einem Bauraum eines Fahrzeugs, insbesondere in einem einer Fahrgastkabine und/oder einem Motorraum zugeordneten Bauraum, zwischen den Innenwänden des Bauraums und einem in den Bauraum einzubauenden Tauscherelement (1), wobei das Verfahren die folgenden Schritte aufweist:
a) Bereitstellen eines Tauscherelements;
b) Anordnen des Tauscherelements in dem Bauraum, wodurch ein Formhohlraum definiert wird zwischen den inneren Abmessungen bzw. Innenwandbereichen des Bauraums und äusseren Abmessungen bzw. Aussenwandbereichen des Tauscherelements;
c) Bereitstellen von flüssigem oder pastösem, aushärtbarem Baumaterial;
d) gezieltes Auftragen des flüssigen oder pastösen, aushärtbaren Baumaterials an ausgewählten Stellen als Baumaterial-Schicht auf eine Zieloberfläche in einem Baubereich mittels eines Auftragungsmittels, wobei die Baumaterial-Schicht einem Querschnitt der zu bildenden Tauscherelement-Packung bzw. des Formhohlraums entspricht;
e) Aushärtenlassen der Baumaterial-Schicht, um das flüssige oder pastöse Baumaterial innerhalb der Baumaterial-Schicht zu verfestigen und mit einer zuvor aufgetragenen und ausgehärteten Baumaterial-Schicht zu verbinden;
wobei die Schritte d) und e) wiederholt durchgeführt werden, um die zu bildende Tauscherelement-Packung schichtweise aufzubauen.

## Claims

1. Vehicle, wherein an exchanger element (1) and a packing (4) are assigned to the vehicle, in particular a passenger compartment and/or an engine bay of the vehicle, wherein the exchanger element comprises an exhaust air flow path (2) and a supply air flow path (3), and wherein the exhaust air flow path and the feed air flow path are separated from one another by partition wall sections which have heat-transferring wall regions, wherein the exhaust air flow path (2) forms a fluid connection from the interior of the vehicle, in particular from the passenger compartment or the engine bay, to the outer surroundings of the vehicle, and wherein the supply air flow path (3) forms a fluid connection from the outer surroundings of the vehicle to a location on board the vehicle, in particular to the interior of the passenger compartment and/or the engine bay, wherein the exchanger element (1) is embedded in a packing (4), whose outer surface shape is complementary to the inner dimensions of an installation space on board the vehicle, in particular in the passenger compartment and/or the engine bay, for the installation of the exchanger element (1).

2. Vehicle according to claim 1, **characterized in that** the packing (4) comprises an expanded and/or foamed polymer material and/or a fiber material, in particular of organic or inorganic fibers, and/or **characterized in that** the packing (4) comprises several packing parts (41, 42).

3. Vehicle according to any one of claims 1 or 2, **characterized in that** the packing (4) comprises a further polymeric material which inside and/or outside enclose the expanded polymeric material of the packing and wherein preferably the further polymeric material is a less expanded or a compact non-expanded polymeric material.

4. Vehicle according to any one of claims 1 to 3, **characterized in that** a first fan (5) is assigned to the exchanger element, arranged upstream or downstream of the exchanger element in the supply air flow path (3) and embedded in the packing (4); and/or **characterized in that** a second fan (6) is assigned to the exchanger element, arranged upstream or downstream of the exchanger element in the exhaust air flow path (2) and embedded in the packing (4).

5. Vehicle according to any one of the claims 1 to 4, **characterized in that** a first air filter (7) is assigned to the exchanger element, arranged on the upstream side of the exchanger element in the supply air flow path (3) and embedded in the packing (4); and/or **characterized in that** a second air filter (8) is assigned to the exchanger element, arranged on the upstream side of the exchanger element in the exhaust air flow path (2) and embedded in the packing (4).

6. Vehicle according to any one of claims 1 to 5, **characterized in that** the partition sections have wall regions selectively permeable to water vapor.

7. Vehicle according to any one of claims 1 to 6, **characterized in that** the packing (4) has regions with a first hardness and regions with a second hardness, wherein preferably the packing (4) has regions adjacent to the exchanger element with a greater hardness and regions adjacent the installation space with less hardness, or that the packing (4) has regions adjacent the exchanger element with less hardness and regions adjacent the installation space with a greater hardness.

8. Vehicle according to any one of the preceding claims, wherein the vehicle is an automobile and the one packing (4) with an exchanger element (1) embedded therein is disposed in at least one of the following locations of the automobile: on the ceiling of the passenger compartment; on the roof of the automobile; on the front side of the automobile; in the A-pillar of the automobile; in the B-pillar of the automobile; in the C-pillar of the automobile; in the rear of the automobile; under the hood of the automobile; in the floor of the automobile.

9. Vehicle according to claim 8, **characterized in that** the exhaust air flow path (2) is in fluid connection with the outer surroundings of the vehicle at a low-pressure external region of the vehicle; and/or **characterized in that** the supply air flow path (3) is in fluid connection with the outer surroundings of the vehicle at a high-pressure external region of the vehicle.

10. Vehicle according to one of claims 8 or 9, **characterized in that** the exchanger element (1) comprises an electric heating element, which can be fed by an accumulator assigned with the electric drive or the hybrid drive.

11. Method for producing an exchanger element packing (4) for arrangement in an installation space on board a vehicle, in particular in an installation space assigned with a passenger compartment and/or an engine bay, between the inner walls of the installation space and an exchanger element (1) to be installed in the installation space, wherein the method comprises the following steps:
a) providing an exchanger element;
b) detecting the inner dimensions of the installation space;
c) detecting the outer dimensions of the exchanger element;
d) providing a mold with a mold cavity, which is limited by an outer mold wall and an inner mold wall, wherein the shape of the outer mold wall is defined by the inner dimensions or inner wall regions of the installation space and the shape of the inner mold wall is defined by the outer dimensions or outer wall regions of the exchanger element;
e) partial filling of the mold cavity with a flowable or pourable material;
f) expanding or foaming of the flowable or pourable material, whereby the mold cavity is filled with the expanded or foamed material; and
g) opening the mold and removing the expanded or foamed material from the mold cavity as an exchanger element packing (4) after the expanded or foamed material has solidified.

12. Method for producing an exchanger element packing (4) in an installation space on board a vehicle, in particular in an installation space assigned with a passenger compartment and/or an engine bay, between the inner walls of the installation space and an exchanger element (1) to be installed in the installation space, wherein the method comprises the following steps:
a) providing an exchanger element;
b) arranging the exchanger element in the installation space, thereby defining a mold cavity between the inner dimensions or inner wall regions of the installation space and outer dimensions or outer wall regions of the exchanger element;
c) foaming the mold cavity with a foamable polymer material; and
d) waiting until the foamed polymer material has solidified.

13. Method for producing an exchanger element packing (4) for arrangement in an installation space on board a vehicle, in particular in an installation space assigned with a passenger compartment and/or an engine bay, between the inner walls of the installation space and an exchanger element (1) to be installed in the installation space, wherein the method comprises the following steps:
a) providing an exchanger element;
b) detecting the inner dimensions of the installation space;
c) detecting the outer dimensions of the exchanger element;
d) providing a mold with a mold cavity limited by an outer mold wall and an inner mold wall, wherein the shape of the outer mold wall is defined by the inner dimensions or inner wall regions of the installation space and the shape of the inner mold wall is defined by the outer dimensions or outer wall regions of the exchanger element;
e) filling the mold cavity with a molten material by injecting the molten material into the mold cavity; and
f) opening the mold and removing the injected material from the mold cavity as an exchanger element packing (4) after the injected material has solidified.

14. Method for producing an exchanger element package (4) for arrangement in an installation space on board a vehicle, in particular in an installation space assigned with a passenger compartment and/or an engine bay, between the inner walls of the installation space and an exchanger element (1) to be installed in the installation space, wherein the method comprises the following steps:
a) providing an exchanger element;
b) arranging the exchanger element in the installation space, whereby a mold cavity is defined between the inner dimensions or inner wall regions of the installation space and outer dimensions or outer wall regions of the exchanger element;
c) providing powdery or coarse-grained, fusible building material;
d) applying of a building material layer comprising the powdery or coarse-grained building material to a target surface in a building region by means of an application agent;
e) selectively applying energy to selected locations of the building material layer corresponding to a cross-section of the exchanger element packing to be formed or of the mold cavity within the building material layer to fuse the powdery or coarse-grained building material at the selected locations; and
f) if necessary, removing of non-fused powdery or coarse-grained building material; wherein steps d) and e) are carried out repeatedly to build up the exchanger element packing to be formed layer by layer.

15. Method for producing an exchanger element packing (4) for arrangement in an installation space of a vehicle, in particular in an installation space assigned with a passenger compartment and/or an engine bay, between the inner walls of the installation space and an exchanger element (1) to be installed in the installation space, wherein the method comprises the following steps:
a) providing an exchanger element;
b) arranging the exchanger element in the installation space, thereby defining a mold cavity between the inner dimensions of inner wall regions of the installation space and outer dimensions or outer wall regions of the exchanger element;
c) providing liquid or pasty, curable building material;
d) selectively applying the liquid or pasty, curable building material at selected points as a building material layer to a target surface in a building region by means of an applicator, wherein the building material layer corresponds to a cross-section of the exchanger element packing to be formed or of the mold cavity;
e) allowing the building material layer to cure to solidify and bond the liquid or pasty building material within the building material layer to a previously applied and cured building material layer;
wherein steps d) and e) are performed repeatedly to build up the exchanger element packing to be formed layer by layer.

## Revendications

1. Véhicule, un élément échangeur (1) et une emballage (4) étant associés au véhicule, en particulier à une cabine de passagers et/ou à un compartiment moteur du véhicule, dans lequel l'élément échangeur comprenant une trajet d'écoulement d'air d'sortant (2) ainsi qu'une trajet d'écoulement d'air d'entrant (3), et dans lequel la trajet d'écoulement d'air d'sortant et la trajet d'écoulement d'air d'entrant sont séparées l'une de l'autre par des sections de paroi de séparation qui présentent des zones de paroi transmettant la chaleur, dans lequel la trajet d'écoulement d'air d'sortant (2) forme une connexion fluidique depuis l'intérieur du véhicule, en particulier depuis la cabine des passagers ou le compartiment moteur, vers l'environnement extérieur du véhicule, et dans lequel le trajet d'écoulement d'air d'entrant (3) forme une connexion fluidique depuis l'environnement extérieur du véhicule vers un endroit à bord du véhicule, en particulier vers l'intérieur de la cabine passagers et/ou du compartiment moteur, l'élément échangeur (1) étant incorporé dans l'emballage (4) dont la forme de surface extérieure est complémentaire des dimensions intérieures d'un espace de construction à bord du véhicule, en particulier dans la cabine passagers et/ou dans le compartiment moteur, pour le montage de l'élément échangeur (1).

2. Véhicule selon la revendication 1, **caractérisé en ce que** l'emballage (4) comprend un matériau polymère expansé et/ou moussé et/ou un matériau fibreux, en particulier constitué de fibres organiques ou inorganiques, et/ou **caractérisé en ce que** l'emballage (4) comprend plusieurs parties d'emballage (41, 42).

3. Véhicule selon l'une quelconque des revendications 1 ou 2, **caractérisé en ce que** l'emballage (4) comprend un autre matériau polymère qui enveloppe intérieurement et/ou extérieurement le matériau polymère expansé de l'emballage et dans lequel, de préférence, l'autre matériau polymère est un matériau polymère moins expansé ou un matériau polymère compact non expansé.

4. Véhicule selon l'une quelconque des revendications 1 à 3, **caractérisé en ce que** l'élément échangeur est associé à un premier ventilateur (5) qui est disposé en amont ou en aval de l'élément échangeur dans le trajet d'écoulement d'air d'entrant (3) et qui est incorporé dans l'emballage (4); et/ou **caractérisé en ce que** l'élément échangeur est associé à un deuxième ventilateur (6) qui est disposé en amont ou en aval de l'élément échangeur dans le trajet d'écoulement d'air d'sortant (2) et qui est incorporé dans l'emballage (4).

5. Véhicule selon l'une quelconque des revendications 1 à 4, **caractérisé en ce qu'**un premier filtre à air (7) est associé à l'élément échangeur, lequel est disposé en amont de l'élément échangeur dans la trajet d'écoulement d'air d'entrant (3) et est incorporé dans l'emballage (4) ; et/ou **caractérisé en ce qu'**un deuxième filtre à air (8) est associé à l'élément échangeur, lequel est disposé en amont de l'élément échangeur dans la trajet d'écoulement d'air d'sortant (2) et est incorporé dans l'emballage (4).

6. Véhicule selon l'une quelconque des revendications 1 à 5, **caractérisé en ce que** les sections de paroi de séparation présentent des zones de paroi sélectivement perméables à la vapeur d'eau.

7. Véhicule selon l'une quelconque des revendications 1 à 6, **caractérisé en ce que** l'emballage (4) présente des zones d'une première dureté et des zones d'une deuxième dureté, l'emballage (4) présentant de préférence des zones adjacentes à l'élément échangeur d'une plus grande dureté et des zones adjacentes à l'espace de construction d'une plus petite dureté, ou **en ce que** l'emballage (4) présente des zones adjacentes à l'élément échangeur d'une plus petite dureté et des zones adjacentes à l'espace de construction d'une plus grande dureté.

8. Véhicule selon l'une quelconque des revendications précédentes, dans lequel le véhicule est une automobile et l'un des emballages (4) avec un élément échangeur (1) incorporé dans celui-ci est disposé à au moins l'un des emplacements suivants de l'automobile: au plafond de l'habitacle; au toit de l'automobile; à l'avant de l'automobile; dans le montant A de l'automobile; dans le montant B de l'automobile; dans le montant C de l'automobile; à l'arrière de l'automobile; sous le capot de l'automobile; dans le plancher de l'automobile.

9. Véhicule selon la revendication 8, **caractérisé en ce que** la trajet d'écoulement d'air d'sortant (2) est en connexion fluidique avec l'environnement extérieur du véhicule au niveau d'une zone extérieure à basse pression du véhicule; et/ou **caractérisé en ce que** la trajet d'écoulement d'air d'entrant (3) est en connexion fluidique avec l'environnement extérieur du véhicule au niveau d'une zone extérieure à haute pression du véhicule.

10. Véhicule selon l'une quelconque des revendications 8 ou 9, **caractérisé en ce que** l'élément échangeur (1) comporte un élément chauffage électrique susceptible d'être alimenté par un accumulateur associé à la propulsion électrique ou à la propulsion hybride.

11. Procédé de fabrication d'un emballage d'élément échangeur (4) destiné à être disposé dans un espace de construction à bord d'un véhicule, en particulier dans un espace de construction associé à une cabine de passagers et/ou à un compartiment moteur, entre les parois intérieures de l'espace de construction et un élément échangeur (1) à monter dans l'espace de construction, dans lequel le procédé comprenant les étapes suivantes:
a) mise à disposition d'un élément échangeur;
b) détection des dimensions intérieures de l'espace de construction;
c) détection des dimensions extérieures de l'élément échangeur;
d) mise à disposition d'un moule avec une cavité de moule, qui est délimitée par une paroi de moule extérieure et une paroi de moule intérieure, la forme de la paroi de moule extérieure étant définie par les dimensions intérieures ou par la paroi de moule intérieure de l'espace de construction et la forme de la paroi intérieure du moule est définie par les dimensions extérieures ou les zones de la paroi extérieure de l'élément échangeur;
e) remplissage partiel de la cavité du moule avec un matériau fluide ou coulant;
f) expansion ou moussage du matériau fluide ou coolant, dans lequel la cavité du moule étant remplie par le matériau expansé ou mousse; et
g) ouverture du moule et retrait du matériau expansé ou moussé de la cavité du moule sous la forme d'un emballage d'élément échangeur (4), après que le matériau expansé ou moussé s'est solidifié.

12. Procédé de fabrication d'un emballage d'élément échangeur (4) dans un espace de construction à bord d'un véhicule, en particulier dans un espace de construction associé à une cabine de passagers et/ou à un compartiment moteur, entre les parois intérieures de l'espace de construction et un élément échangeur (1) à monter dans l'espace de construction, dans lequel le procédé comprenant les étapes suivantes:
a) mise à disposition d'un élément échangeur;
b) mise en place de l'élément échangeur dans l'espace de construction, ce qui permet de définir une cavité de moulage entre les dimensions intérieures ou les zones de paroi intérieure de l'espace de construction et les dimensions extérieures ou les zones de paroi extérieure de l'élément échangeur;
c) moussage de la cavité de moule avec un matériau polymère expansible; et
d) attendre que le matériau polymère expanse solidifie.

13. Procédé de fabrication d'un emballage d'élément échangeur (4) destiné à être disposé dans un espace de construction à bord d'un véhicule, en particulier dans un espace de construction associé à une cabine de passagers et/ou à un compartiment moteur, entre les parois intérieures de l'espace de construction et un élément échangeur (1) à monter dans l'espace de construction, dans lequel le procédé comprenant les étapes suivantes:
a) mise à disposition d'un élément échangeur;
b) détection des dimensions intérieures de l'espace de construction;
c) détection des dimensions extérieures de l'élément échangeur;
d) mise à disposition d'un moule avec une cavité de moule, qui est délimitée par une paroi de moule extérieure et une paroi de moule intérieure, la forme de la paroi de moule extérieure étant définie par les dimensions intérieures ou par la paroi de moule intérieure de l'espace de construction et la forme de la paroi intérieure du moule est définie par les dimensions extérieures ou les zones de la paroi extérieure de l'élément échangeur;
e) remplir la cavité du moule avec un matériau fondu en injectant le matériau fondu dans la cavité du moule; et
f) ouvrir le moule et retirer le matériau injecté de la cavité du moule sous la forme d'un emballage d'élément d'échangeur (4) après que le matériau injecté s'est solidifié.

14. Procédé de fabrication d'un emballage d'élément d'échange (4) destiné à être disposé dans un espace de construction à bord d'un véhicule, en particulier dans un espace de construction associé à une cabine de passagers et/ou à un compartiment moteur, entre les parois intérieures de l'espace de construction et un élément d'échangeur (1) à monter dans l'espace de construction, dans lequel le procédé comprenant les étapes suivantes:
a) mise à disposition d'un élément d'échangeur;
b) disposition de l'élément d'échangeur dans l'espace de construction, ce qui permet de définir une cavité de moulage entre les dimensions intérieures ou les zones de paroi intérieure de l'espace de construction et les dimensions extérieures ou les zones de paroi extérieur de l'élément d'échangeur;
c) mise à disposition d'un matériau de construction fusibles en poudre ou à gros grains;
d) application d'une couche de matériau de construction comprenant le matériau de construction pulvérulent ou à gros grains sur une surface cible dans une zone de construction au moyen d'un agent d'application;
e) application ciblée d'énergie sur des emplacements sélectionnés de la couche de matériau de construction, qui correspondent à une section transversale de l'emballage de l'élément échangeur à former ou de la cavité de moulage à l'intérieur de la couche de matériau de construction, afin de fair fondre le matériau de construction pulvérulent ou à gros grains aux emplacements sélectionnés, et
f) le cas échéant, éliminer le matériau de construction pulvérulent ou à gros grains non fondus;
dans lequel les étapes d) et e) étant effectuées de manière répétée afin de construire par couches l'emballage d'éléments d'échangeur à former.

15. Procédé de fabrication d'un emballage d'élément d'échangeur (4) destiné à être disposé dans un espace de construction d'un véhicule, en particulier dans un espace de construction associé à une cabine de passagers et/ou à un compartiment moteur, entre les parois intérieures de l'espace de construction et un élément d'échangeur (1) à monter dans l'espace de construction, dans lequel le procédé présentant les étapes suivantes
a) mise à disposition d'un élément d'échangeur;
b) disposition de l'élément d'échangeur dans l'espace de construction, ce qui permet de définir une cavité de moulage entre les dimensions intérieures ou les zones de paroi intérieure de l'espace de construction et les dimensions extérieures ou les zones de paroi extérieur de l'élément d'échangeur;
c) mise à disposition d'un matériau de construction liquide ou pâteux, durcissable;
d) application ciblée du matériau de construction liquide ou pâteux, durcissable, à des emplacements sélectionnés, en tant que couche de matériau de construction, sur une surface cible dans une zone de construction, à l'aide d'un moyen d'application, la couche de matériau de construction correspondant à une section transversale de l'emballage d'élément échangeur à former ou de la cavité de moulage;
e) laisser durcir la couche de matériau de construction afin de solidifier le matériau de construction liquide ou pâteux à l'intérieur de la couche de matériau de construction et de le lier à une couche de matériau de construction appliquée et durcie précédemment;
dans lequel les étapes d) et e) étant effectuées de manière répétée afin de construire par couches l'emballage d'éléments échangeur à former.
